# EUROPEAN PATENT SPECIFICATION

(11) **EP 4 381 136 B1**
(45) Date of publication and mention of the grant of the patent: **14.01.2026**
(21) Application number: 22748495.3
(22) Date of filing: 03.08.2022
(51) Int. Cl.: E02D 7/06, E02D 7/02, E02D 7/08, E02D 7/26, E02D 7/28, E02D 23/14, E02D 27/42

(54) **METHOD FOR DRIVING A PILE**
VERFAHREN ZUM RAMMEN EINES PFAHLS
PROCÉDÉ D'ENFONCEMENT D'UNE PILE

(30) Priority: 05.08.2021 NL 2028930
(43) Date of publication of application: 12.06.2024
(73) Proprietor: IQIP Holding B.V., 3361 EP Sliedrecht (NL)
(72) Inventor: WINKES, Jasper Stefan, 2628 XJ Delft (NL)
(74) Representative: HGF
(86) International application number: PCT/NL2022/050456
(87) International publication number: WO 2023/014221

(56) References cited:
- DE-A1- 10 324 161
- GB-A- 1 088 804
- GB-A- 2 325 017

## Description

This invention relates generally to offshore piles. More specifically, although not exclusively, this invention relates to a method of driving a pile into soil.

Offshore piles, for example foundation piles such as monopiles or jacket piles, are driven into soil to provide foundations for above-water structures.

The piles are usually driven into the floor using an axial force. The axial force may be in the form of sequential axial impulses, or pulses, provided by a pile driving tool, for example a pile driving hammer. The axial force may be in the form of a vibratory axial force applied to the pile. Clearly, driving in the pile using axial force requires sufficient energy to be transmitted to the pile to overcome the resistance offered by the soil. The resistance includes the direct force acting on the toe, or lower edge, of the pile, as well as friction forces acting on the radially inner and outer surfaces of the pile.

In order to overcome the direct force acting on the toe, the pile must displace the floor material away from the path of the toe as the pile is driven into the soil. The diameter of the pile may be, for example, between 6 m and 13 m, and the wall thickness may be, for example, 100 mm. Therefore, the surface area of the toe may be up to, for example, 4 m². As such, to move the pile 250 mm into the soil, up to 1 m³ of soil might need to be displaced which requires a large amount of energy. Furthermore, as the pile moves deeper, the soil is more densely packed and so the resistance offered by the soil to the toe increases, requiring an increasing amount of energy to be imparted to the pile.

It will be appreciated that the friction forces acting on the radial faces of the pile also increase with depth, as more of the surfaces become in contact with soil. Furthermore, as the pile penetrates deeper into the soil the direct forces acting on the radial faces increases due to the more densely packed soil, thereby increasing the friction forces.

Overcoming these resistances requires very large axial forces to be applied to the piles. These axial forces create large stress fluctuations in the piles which sometimes cause damage, or even failure, in the piles or associated structures. The damage may be fatigue damage, which affects the remaining fatigue capacity of the pile, which, in turn, affects the lifetime of the pile and associated structures. Accordingly, the piles must be designed with sufficient strength to withstand the high impact forces, which increases the cost of the piles. For example, it may be the load required to drive the pile that governs the wall thickness of the pile. Furthermore, the vibration of the pile caused by the impacts delivered with an installation tool result in large amounts of noise during the piling process, which has negative environmental effects, and also increases health risks to nearby personnel.

It is known to use suction caissons as anchors or supports. Suction caissons are typically tubular in shape, with one closed end and one open end. The open end is placed on the soil and allowed to penetrate the soil due to the self-weight of the caisson. Water is then pumped through the closed end creating a lower pressure inside of the caisson, relative to the outside of the caisson, which causes the caisson to penetrate the soil further. Due to the lower forces exerted in comparison to pile driving methods, the penetration depth is much less. Therefore, due to the lower penetration depth suction caissons provide a lower resistance to overturning moments than driven piles of the same diameter, as the driven piles are installed deeper.

It is also known to use water jets, located at the toe of the pile, to remove material from the path of the toe as the toe is driven into the soil. This reduces the effective stresses in the soil near to the toe as the pile is driven into the soil, such that the toe can displace the soil particles more easily. An example of such a process is provided in WO2019/206690. In WO2019/206690 the toe is angled inwards relative to the pile to direct soil towards an internal bore of the pile as the pile is pushed into the soil. Jets also remove material in the inwards and downwards directions, and a pump removes water and soil material from the internal bore of the pile. Clearly, providing such jets increases the cost and complexity of the piling process. Furthermore, a control system is required to minimise the pressure difference between the soil near to the toe and the ambient water to prevent the soil material outside of the pile from being weakened.

It is an objective of the present invention to overcome at least some of these limitations.

As will be appreciated, overcoming the aforementioned limitations would enable larger diameters of pile to be used. Alternatively, overcoming the aforementioned limitations would allow piles of the same size to be driven into soil with less force, thereby allowing simpler and/or smaller vessels and installation equipment to be used to install piles.

GB2325017A discloses a method of installing a tubular member in a porous, solid medium beneath the surface of a body of water. The method comprises placing an open-ended member in an upright position with an open end positioned upon the solid medium, allowing water to pass into the interior chamber of the member through the open end, pumping out a given amount of water to reduce the water level below that of the water surrounding the tubular member and driving the tubular member into the solid medium.

According to a first aspect of the invention there is provided a method for driving an offshore pile, for example an offshore foundation pile, into soil, for example soil of an underwater floor, the method comprising:
providing a pile, the pile comprising a peripheral wall extending from a lower, open, end;
positioning the pile in a first position wherein the lower, open, end of the peripheral wall is closed by the soil to define an internal space inside of the peripheral wall;
providing a pile driving assembly in a coaxial arrangement at or in an upper end of the pile;
providing pumping equipment at a location adjacent to the pile;
exerting a driving force onto the pile using the pile driving assembly, to drive the pile into the soil; and
pumping water, using the pumping equipment, from the internal space during the exertion of the driving force, to lower the water level in the internal space such that water flows from outside of the pile to the internal space through the lower, open end of the peripheral wall.

Advantageously, creating a flow of water reduces the effective stress between the soil particles near to the lower end of the peripheral wall, thereby reducing the resistance offered by the soil to the movement of the peripheral wall into the soil. Reducing the water column height inside of the pile also advantageously reduces the pressure on the soil inside of the pile, and so reduces the stress between soil particles in the soil inside of the peripheral wall, such that the lower edge of the peripheral wall can displace soil particles more easily. Reducing the water column height inside of the pile also reduces the hydrodynamic drag, caused by water thrust, acting on the radially inner surface of the peripheral wall, as the pile moves downwards into the soil. These factors all reduce the necessary magnitudes of the driving force applied, thereby reducing the size, complexity, and cost of the pile driving equipment and vessel. By reducing the necessary loads to be applied to the pile, the noise created during pile driving is reduced, and the stress applied to the pile is reduced. The risk of damage, or the extent of fatigue, to the pile is therefore decreased. Furthermore, the lower loading requirements improves the versatility of design of the piles, to, for example, use larger diameter piles, with reduced wall thicknesses, or to incorporate non-vertical, or frustoconical, sections with greater angles relative to the axis of the pile. Advantageously, the water is pumped simultaneously with the exertion of the driving force. This helps reduce resistance from the soil, which acts against the movement of the lower, open end of the peripheral wall into the soil.

Pumping water from the internal space may lower the water level in the internal space below a water level outside of the pile. Advantageously, this may result in a reduction in hydrostatic pressure in the internal space. The reduction in pressure in the internal space encourages the flow of water from outside the pile into the internal space. The reduction of pressure in the internal space may also, advantageously, result in the pile being subjected to hydrostatic pressure by the surrounding water.

The method further includes:
providing a sensor, wherein the sensor is provided in the internal space,
measuring, with the sensor, a pressure in the internal space or the water level in the internal space,

The method may further include:
determining pumping parameters for the pumping equipment based on the measurements from the sensor,
operating the pumping equipment using the determined pumping parameters, for example with a control system.

The pile may be a monopile or a jacket pile.

Water may be pumped from the internal space during the application of the driving force such that water flows through the soil adjacent a lower edge, or toe, of the peripheral wall. Advantageously, the effective stress between soil particles which are adjacent to the lower edge will be reduced, thereby reducing the resistance offered by the soil to the lower edge as the peripheral wall is driven into the soil.

Water may be pumped from the internal space during the application of the driving force such that water flows through the soil adjacent a radially outer surface or a radially inner surface (or both a radially outer surface and a radially inner surface) of the peripheral wall.

Creating a flow of water adjacent the radially inner wall and adjacent the radially outer wall advantageously reduces friction between the respective wall and the soil as the pile is driven into the soil.

Water flow from outside of the pile to the internal space may comprise water flowing through at least one channel located in a radially outer surface of the peripheral wall.

The at least one channel may extend from the lower end of the peripheral wall to a position which is above the soil when the pile is in the embedded position. The at least one channel may extend circumferentially around the peripheral wall. The at least one channel may be cut into the peripheral wall.

Advantageously, providing channels in the radially outer surface of the peripheral wall encourages fluid to flow through the soil adjacent to the radially outer wall, thereby acting to prevent an increase in the effective stress between soil particles on the outside of the peripheral wall. Furthermore, the channels may initiate fluid flow from outside of the pile to the internal space, if the soil is otherwise substantially sealed against the radially outer surface.

The water may be pumped out of the internal space through an opening in the pile. The opening may be at an upper end of the pile. The opening may be through the peripheral wall. Advantageously, providing the opening through the peripheral wall means that pumping does not impede upon the pile driving assembly.. The opening may be an aperture through which a cable is passed, once the pile is in operation. Advantageously, using a cable-hole to pump water out of the pile means that no structural changes need to be made to the pile for pumping.

The pile driving assembly may comprise a hammer or a weight to be lifted and dropped, such that energy is transmitted to the pile. The weight may be water which is stored in a reservoir.

The pile or pile driving assembly may further comprise a closing member. The closing member may close an upper, open end of the peripheral wall. The water may be pumped out of the internal space through an opening in the closing member. Advantageously, as the pressure in the internal space is lowered during pumping, the hydrostatic pressure from the surrounding water may act upon the closing member to push the pile into the soil. Furthermore, the closing member defines a closed or substantially sealed space within the internal space. As such, in the event of a soft soil layer being encountered during pile driving the pile will drop and rapidly penetrate the soil and the pressure in the internal space will increase due to the internal space contracting rapidly. This pressure increase will prevent, or at least reduce the risk of, further dropping of the pile into the soil.

The pile driving assembly may exert an axial loading routine. The axial loading routine may comprise predetermined sequential blows. The axial loading routine may comprise vibratory loading.

A pile gripper may be used to keep the pile in a vertical orientation when positioning the pile in the first position.

The step of positioning the pile in the first position may comprise lowering the pile onto the soil to the first position. Lowering the pile onto the soil may be by using a crane. Self-weight of the pile may cause the peripheral wall to penetrate the soil.

In the embedded position, the lower edge of the peripheral wall may be between 20 m and 50 m below the surface of the underwater floor.

Once the pile is driven into the soil to a predetermined depth, the pile may be configured to support an above-surface structure. The above-surface structure may be a wind turbine.

All underwater openings in the pile, further to the open end of the peripheral wall which is closed by the soil, and further to any openings through which water is pumped, may be sealed.

The pile comprises a lower section having a first diameter. The pile comprises an upper section. The upper section has a second diameter. The second diameter is less than

the first diameter. The upper section may be frustoconical, or cone-shaped. Applying a driving force to the pile to drive the pile into the soil involves driving a part of the lower section of the pile into the soil.

The method may further comprise connecting the upper section to the lower section after the lower section has been driven into the soil. Advantageously, the upper section may not be subjected to the driving force. Therefore, a lighter and/or less complex upper section may be used than in cases where the upper section is subjected to the driving force. This allows less complex and/or expensive pile driving apparatus to be used. By using lighter materials, a smaller installation vessel may also be used, further decreasing complexity and cost. Further advantageously, the entire pile may be decommissioned by removing any structure above the lower section, and then by applying a pressure vessel head to the lower section to pressurise the water below the pressure vessel head and inside of the lower section, thereby pushing the lower section out of the soil.

The pile may further comprise an intermediate section located between the lower section and the upper section. The intermediate section may be frustoconical in shape.

Advantageously, the reduction in the water column in the internal space reduces the effect of hydrostatic drag acting on the radially inner surface of the peripheral wall, which is particularly prominent on sections which are not vertical (for example the intermediate section). That is, previously the progressive reduction of the diameter of the intermediate section accelerates the water upwards as the pile is driven downwards thereby significantly increasing the hydrostatic drag on the radially inner surface of the intermediate section. Further advantageously, reducing the column height inside of the pile relative to the outside water level increases the hydrostatic pressure on the intermediate section, which acts to push the pile into the soil.

According to a second aspect of the invention there is provided a system for driving an offshore pile into soil, the system comprising:
a pile comprising a peripheral wall extending from a lower, open end;
positioning apparatus for positioning the pile in a first position wherein the lower, open end of the peripheral wall is closed by the soil to define an internal space inside of the peripheral wall;
a pile driving assembly for exerting a driving force onto the pile to drive the pile into the soil, wherein, in use, the pile driving assembly is provided in a coaxial arrangement at or in an upper end of the pile; and
pumping equipment for pumping water from the internal space during the exertion of the driving force, to lower the water level in the internal space such that water flows from
outside of the pile to the internal space through the lower open, end of the peripheral wall.

The system of the second aspect of the invention may be used to implement the method of the first aspect of the invention.

The system further comprises sensor. The sensor is configured to measure the pressure or the water level in the internal space. The measurements from the sensor may be usable to control the pumping equipment. That is, a control system may use the sensor measurements to determine suitable operation of the pumping equipment. The measurements from the sensor may be usable to control the pile driving assembly to control the magnitude of the driving force applied to the pile. The measurements from the sensor may be usable to detect the pile dropping and rapidly penetrating the soil, due to an increase in pressure in the internal space. Detection of the pile dropping may be usable to control the pile driving assembly to reduce the magnitude of the driving force applied to the pile. The measurements from the sensor may be usable to determine a pressure difference between the internal space and outside of the pile. The pressure difference may be usable to calculate a downward force acting on the pile due the pressure difference. The downward force due to the pressure difference may be usable to control the pile driving assembly to control the magnitude of the driving force as a function of the downward force due to the pressure difference.

The system may comprise a closing member. The closing member may be configured to close an upper, open end of the peripheral wall.

The system may further comprise a pile gripper. The pile gripper may be usable to keep the pile in a vertical orientation when positioning the pile in the first position.

The pile comprises a lower section having a first diameter and an upper section having a second diameter. The second diameter is less than the first diameter. In use, applying a driving force to the pile to drive the pile into the soil involves driving a part of the lower section of the pile into the soil.

The pile may further comprise an intermediate section located between the lower section and the upper section. The intermediate section may be frustoconical in shape.

The pumping equipment may be located externally to the pile. Advantageously, this means that holes which are present in the peripheral wall, such as cable-entry holes, may be used to pump water from the internal space. Therefore, pump conduits need not pass through the upper end of the pile, where they may interfere with pile driving assembly. Furthermore, as holes, such as the cable-entry hole, are already present in the peripheral wall, no changes need to be made to the pile to pump water out of the internal space. Further advantageously, by locating the pump externally to the pile, the pump may not impede upon the pile driving process.

The system may further comprise a crane which is used to lower the pile onto the soil in the first position. The system may further comprise a floating vessel from which the pile is suspended before being driven into the soil.

The installation method and corresponding system will now be described by way of example only with reference to the accompanying drawings in which:
Figure 1 is a schematic of an offshore pile being driven into soil using a first method;
Figure 2 is a schematic of an offshore pile being driven into soil using a second method;
Figure 3 is a schematic of a different offshore pile design being driven into soil; and
Figure 4 is a schematic of another, different, offshore pile design being driven into soil.

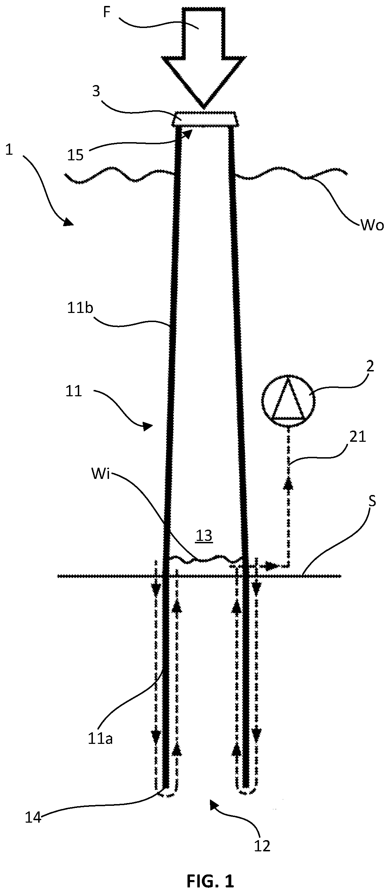

Turning to Figure 1, there is shown a first example of a method for installing a pile 1 into soil S. In this example the pile 1 is a monopile, but it will be appreciated that the method disclosed herein may be applied to other piles, such as to jacket piles. The pile 1 has a peripheral wall 11 extending from a lower, open end 12. In this example, the peripheral wall 11 has a lower section 11a and an upper section 11b. The lower section 11a is cylindrical in shape. The upper section 11b is frustoconical in shape. A lower end of the upper section 11b has a diameter equal to that of the lower section 11a. The upper end of the upper section 11b, which is an upper end 15 of the pile 1, has a smaller diameter than that of the lower section 11b.

The pile 1 is driven into the soil S of an underwater floor. The soil S may be of any known soil type which is suitable for pile driving, such as clay or sand. The length of the lower section 11a is typically greater than a depth which the pile 1 is to be driven into the soil S.

To drive the pile 1 into the soil S, the pile 1 is positioned into a first position (not shown). In the first position, the lower, open end 12 of the pile 1 is closed by the soil S to define an internal space 13 inside of the peripheral wall 11.

In this example, the pile 1 is positioned into a first position by lowering the pile 1 from installation apparatus (not shown), for example a floating installation vessel. The pile 1 is lowered using a crane (not shown). The pile 1 is lowered to the soil S such that a lower end 14 of the peripheral wall 11 reaches the soil S first. The self-weight of the pile 1 causes the peripheral wall 11 to penetrate the soil S.

In this example a pile gripper (not shown) is introduced to stabilise the pile 1, such that the pile 1 is held in a vertical orientation. Once the pile 1 is stabilised, the crane, and associated tether, are removed.

To drive the pile 1 into the soil S a driving force F is applied to the pile 1. In this example the driving force F is applied to the upper end 15 of the pile 1. The driving force F drives the pile 1 from the first position to an embedded position (as shown in Figure 1).

In this example the driving force F is performed with a piling driving assembly. The piling driving assembly may comprise a hammer, a vibratory hammer or a dead weight (for example a reservoir filled with water). The pile driving assembly may further comprise means with which to lift and subsequently drop the hammer or weight to transmit energy to the pile. That is, the driving force F may include sequential impulses, vibratory loading or the like.

In this example, the pile driving assembly also comprises an anvil 3 provided at the upper end 15 of the pile 1 during the driving force F. The anvil 3 is substantially disc-shaped and the upper end 15 of the pile 1 engages with a lower face of the disc-shaped anvil 3. However, it will be appreciated that any suitable anvil 3 may be used. It will also be appreciated that the anvil 3 may be omitted and the driving force F may be applied directly to the peripheral wall 11.

As the driving force F is applied to the pile 1, the pile 1 is driven into the soil S. Water is pumped from the internal space 13 during the application of the driving force F to lower the water level Wi in the internal space 13 such that water flows from outside of the pile 11 to the internal space 13 through the lower, open end 12 of the peripheral wall 11. As water is pumped from the internal space the level Wi is lowered below, or further below the water level surrounding the pile 11, Wo. It will be appreciated that soil S, debris or marine organisms may also be pumped out of the internal space 13. In this example the water is pumped into the water surrounding the pile 11. The pumping of water may begin when the peripheral wall 11 reaches a predetermined penetration depth into the soil S. For example, the pumping of water may begin when the pile 1 has penetrated the soil through self-weight only or the pumping of water may only begin when the pile 1 has been driven into the soil through a specific depth.

In this example, water is pumped from the internal space 13, during the application of the driving force F, using a pump 2 which is external to the pile 1. Water is pumped from the internal space 13 at a rate sufficient to reduce the water level Wi in the internal space 13 and then at least maintain the reduced water level Wi. This creates a differential pressure between the outside and the inside of the peripheral wall 11. This pressure differential causes water to flow through the soil S from outside of the pile 1 to the internal space 13.

The water level Wi in the internal space may be reduced by any suitable amount. However, it would be understood that the larger the reduction in the water level Wi, the greater the pressure differential. For example, the water level Wi may be reduced so that the water level Wi approximates or is substantially equal to the surface of the underwater floor (as shown in Figure 1).

The flow of water from outside the pile 1 to the internal space 13 may take the form of a number of discrete flow paths - a typical water flow path is shown by a dashed line in Figure 1. In this flow path, water flows from above the soil surface S, downwardly adjacent to a radially outer surface of the peripheral wall 11, around the lower edge 14 of the peripheral wall 11 and into the lower, open end 12 of the peripheral wall 11. The flow then continues upwardly adjacent to a radially inner surface of the peripheral wall 11.

The pump 2 is submerged underwater, and is either tethered to a floating structure, or is a floating pump. The pump 2 is fluidically coupled to the internal space 13 by a conduit 21. In this example the conduit 21 is a flexible conduit. The use of a flexible conduit reduces the risk of damage to the conduit 21 or to the pump 2 during the driving process. In this example, the conduit 21 passes through a hole which is, for example, a cable hole for passing a cable through the peripheral wall once the pile 1 is in the embedded position. All other holes in the pile 1 which are underwater are sealed.

The pile gripper stabilises the pile 1 during the driving force F until the pile 1 is sufficiently stabilised by the soil S. At this point the pile gripper may be removed.

The driving force F continues while water is pumped from the internal space 13, until the pile 1 reaches an embedded position. It would be understood that an embedded position for a pile 1 is a depth at which it can be used effectively as a foundation, for example to support an above-water structure such as a wind turbine. For example in the embedded position, the lower edge 14 of the peripheral wall 11 may be between 20 m and 50 m below the surface of the underwater floor 5. Once in the embedded position, the installation equipment, including the pile driving assembly, the pump 2, and the conduit 21, are removed, and the above-water structure is assembled onto the pile 1.

By creating fluid flow, or fluid flow channels, from outside of the pile to the internal space 13, during the application of the driving force F, effective stresses between soil particles adjacent to the surfaces of the peripheral wall 11 are reduced. This reduces the resistance acting by the soil S onto the pile 1, lowering the amount of energy required to drive the pile 1 into the soil S. Furthermore, by removing or reducing the level of water in the internal space 13, the volume of water moving upwards inside of the upper section 11b of the peripheral wall 11 when the pile 1 is driven downwards is reduced. The frustoconical shape of the upper section 11b means that if water were to move upwards inside thereof (relative to the downward movement of the pile 1), there would be a significant amount of hydrostatic drag acting on the radially inner surface. Therefore, removing the water prevents this hydrostatic drag from occurring. Furthermore, by removing the water from inside of the upper section 11b, the hydrostatic pressure acting on the upper section 11b from the surrounding water will further drive the pile 1 into the soil S. Further still, by lowering the internal water level Wi, the stresses between the particles in the soil inside of, and below, the peripheral wall 11, are lowered, due to the lower column of water applying less pressure to the soil S, and so the particles may be displaced more easily by the peripheral wall 11.

In summary, by pumping water out from the internal space 13, the driving force F requires less energy to drive the pile 1 to the embedded position than if water was not pumped from the internal space 13 in the same pile 1. This may reduce the cost and/or complexity of the pile driving method or may enable larger piles 1 to be driven into the soil S.

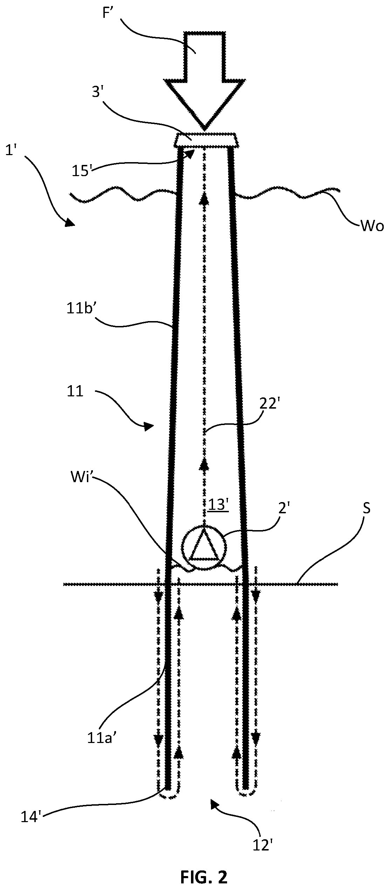

Turning now to Figure 2, there is shown a second example of a method for installing a pile 1' into soil S. This example is similar to that of the first example (as described with reference to Figure 1) and like features are denoted with like reference numerals with a subsequent prime symbol. The method of this example differs from the first example with the exception that the pump 2' is in the internal space 13' and is at least partially submerged in water, which it pumps out of the internal space 13'. There is also provided a downstream conduit 22' which transports water from the pump 2', and out through the upper end 15' of the pile 1'. The downstream conduit 22' may pass through the anvil 3' and any other components of the pile driving assembly, or the pump 2' and conduit 22' may be lowered into the internal space 13' between successive loads applied to the pile 1' in the driving force F'.

As with the first example method shown in Figure 1, with the second example method shown in Figure 2 the extraction of the water from the internal space 13' creates water flow paths through the soil S, thereby reducing the effective stresses between particles of the soil S, and reducing the resistance from the soil S acting on the peripheral wall 11'.

The method described with reference to Figure 2 may be varied in a further example method, whereby the pump is located externally to the pile, and an upstream conduit extends from the pump into the internal space.

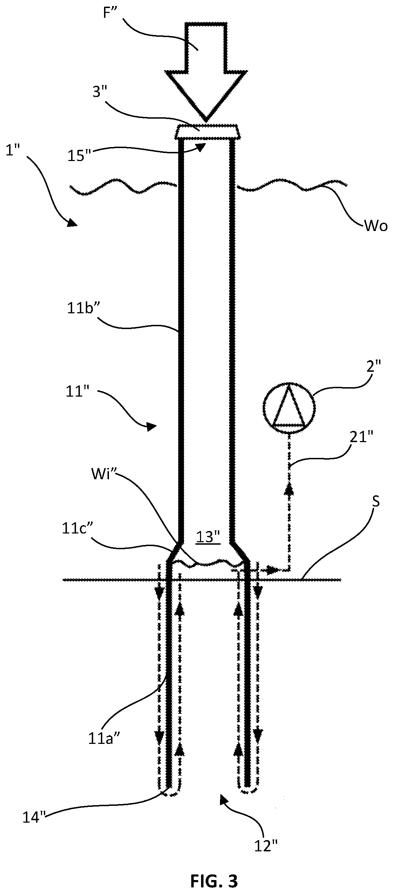

Turning now to Figure 3 there is shown a further example of an installation for a pile 1". The installation method in this example is similar to that described with reference to Figure 1, and like features are denoted with the same reference numerals, with a subsequent double prime symbol in Figure 3. The pile 1" of this example differs from that described with reference to Figure 1 in that the peripheral wall 11" has an intermediate section 11c" located between the lower section 11a" and the upper section 11b". The upper section 11b" in this example is cylindrical in shape and has a smaller diameter than the lower section 11a". The intermediate section 11c" is frustoconical, or cone-shaped, and is located between the upper section 11b" and the lower section 11a".

This shape of pile 1" is possible due to the lower loads required in the driving force F", as made possible due to the reduction in soil resistance and the removal of the hydrostatic drag inside of the pile 1" during pile driving. This pile 1" is further advantageous in that a hydrostatic force acts upon the intermediate section 11c" when the water is removed from the internal space 13", to push the pile 1" into the soil S.

In a further example, the pile 1" shown in Figure 3 is used in the installation method described with reference to Figure 2, such that the pump 2' is located inside of the internal space 13'.

In a further example, the pile 1" shown in Figure 3 is used in an installation method where the pump is located externally to the pile, and a conduit is lowered from the upper end of the pile into the internal space, to pump out water.

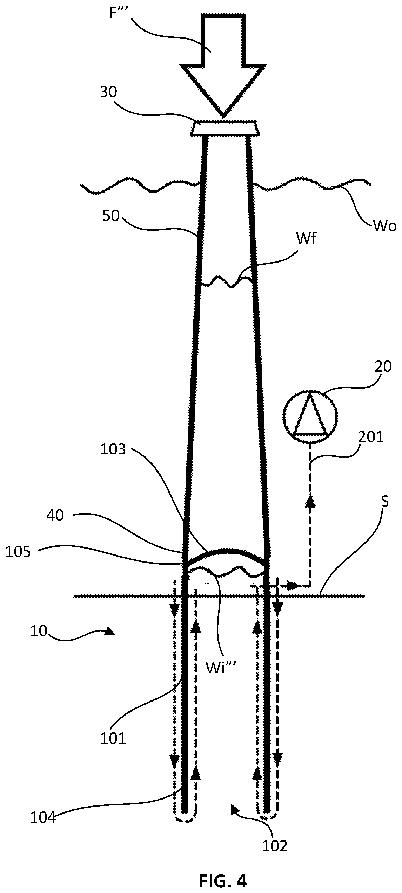

Turning now to Figure 4 there is shown another example of a method for installing a pile 10 into soil S. In this example the pile 10 is fully submerged underwater. The pile 10 has only a cylindrical peripheral wall 101 extending from an open, lower end 102. As in the previous examples, a lower end 104 of the peripheral wall 101 is driven into the soil, and the pile 10 is driven into the soil S using a driving force F"'.

A closure, or closing member 40 is provided on the pile 10, which closes an upper end 105 of the peripheral wall 104. The closure 40 is temporarily attached to, or engaged wit, the peripheral wall 104. The soil S, peripheral wall 104 and closure 40 define an internal space 103 of the pile 10. Water is pumped from the internal space 103 during the application of the driving force F‴ by a pump 20, in the same way as in the examples described with reference to Figures 1 and 3.

As in previous examples a pile driving assembly may apply the driving force F‴ to an anvil 30. However, as the driving means (i.e. the hammer or the like) of the pile driving assembly are located above-water, the pile driving assembly may further include a follower 50 is used to transfer energy between the anvil 30 and the pile 10, the follower 50 being an extension between the upper end of the pile and the driving means of the pile driving assembly. The follower 50 may be of any suitable construction to transfer energy in the axial direction.

In this example the closure 40 is attached to a lower end of the follower 50. That is, the closure 40 closes the upper end 105 of the peripheral wall 104 as the follower 50 is brought into engagement with upper end 105 of the peripheral wall 104.

In this example, water is allowed into an internal volume of the follower 50. For example, water may be pumped from the internal space of the pile into the internal space of the follower, or water may ingress into the follower through holes therein. The water level in the follower 50, Wf, may be less than, more than, or the same as the outside water level Wo.

Advantageously, the water in the follower 50 applies a downward force onto the closure 40, thereby pushing the pile 10 into the soil S. In some examples, the water level Wf in the follower 50 is controlled to apply a predetermined amount of downward force onto the closure 40.

Once the pile 10 is in the embedded position, the closure 40 may be removed and a structure connected to the top of the pile 10 - for example an upper section may be added to the pile 10, the upper section being a part of a jacket structure, or a monopile, for example. Advantageously, this provides versatility, in that one design of pile 10 can be used for different structures. Furthermore, the upper structure need not be subjected to the driving force F‴, thereby reducing the risk of damage to the structure, but also allowing lower cost structures to be used. Further still, by using a short pile 10, the pile 10 may have a larger diameter and wall thickness, and so provide a more stable foundation for the structure to be connected thereto.

In another example, the method of installing a pile is the same as that described with reference to Figure 4, with the exception that the conduit passes through a hole in the closure. This example is used in cases where there are no holes passing through the peripheral wall.

In any of the aforementioned examples, channels may be provided on the radially outer wall, or radially inner wall, of the peripheral wall. The channels may be provided integrally with the peripheral walls, for example cut into the peripheral walls as grooves. The channels may be provided as separate components and suitably attached to the peripheral walls, for example welded. The channels may extend from the lower end of the peripheral wall to a position which is above the soil level, when the pile is in the embedded position. Additionally, or alternatively, the channels may be circumferential channels. The channels may encourage, or initiate, the formation of flow paths through the soil, or may improve the distribution of the flow paths around the peripheral wall.

In any of the aforementioned examples there may be provided a control system. The pile driving assembly and/or the pump may be in communication with the control system. The control system controls the driving force applied by the pile driving assembly and controls the pump settings, for example pumping rate, of the pump.

In any of the aforementioned examples a sensor is provided to measure the pressure or the water level in the internal space. The sensor is in communication with the control system. Measurements from the sensor is used to control the pump to achieve a desired pressure or water level in the internal space, by adjusting the pump settings. Additionally, or alternatively, the control may use measurements from the sensor to control the pile driving assembly to control the magnitude of the driving force applied to the pile. Additionally, or alternatively, the control system may use the measurements from the sensor to detect the pile dropping and rapidly penetrating the soil, due to an increase in pressure in the internal space. Furthermore, the control system may use the detection of the pile dropping to control the pile driving assembly to reduce the magnitude of the driving force applied to the pile or to cancel it all at once, if required. Additionally, or alternatively, the control system may use measurements from the sensor to determine a pressure difference between the internal space and outside of the pile. The pressure difference may be used to calculate a downward force acting on the pile due the pressure difference. The control system may use the downward force due to the pressure difference to control the pile driving assembly to control the magnitude of the driving force as a function of the downward force due to the pressure difference.

It will be clear to a person skilled in the art that features described in relation to any of the embodiments described above can be applicable interchangeably between the different embodiments. The embodiments described above are examples to illustrate various features of the invention.

## Claims

1. A method for driving an offshore pile (1) into soil (S), the method comprising:
providing a pile, the pile comprising a peripheral wall (11) extending from a lower, open, end (12);
positioning the pile in a first position wherein the lower, open, end of the peripheral wall is closed by the soil to define an internal space (13) inside of the peripheral wall;
providing a pile driving assembly in a coaxial arrangement at or in an upper end (15) of the pile;
providing pumping equipment (2) at a location adjacent to the pile;
exerting a driving force (F) onto the pile using the pile driving assembly, to drive the pile into the soil; and
pumping water, using the pumping equipment, from the internal space during exertion of the driving force, to lower the water level (Wi) in the internal space such that water flows from outside of the pile to the internal space through the lower,
open end of the peripheral wall, wherein pumping water from the internal space (13) lowers the water level (Wi) in the internal space (13) below, or further below,
a water level outside of the pile (1),
**characterised in that** the method further comprises:
providing a sensor, wherein the sensor is provided in the internal space (13);
measuring, with the sensor, a pressure in the internal space (13) or the water level (Wi) in the internal space and the pile (1) comprises a lower section (11a) having a first diameter and an upper section having a second diameter, the second diameter being less than the first diameter, wherein applying a driving force (F) involves driving a part of the lower section (11a) of the pile (1) into the soil.

2. A method according to claim 1, wherein pumping water and exerting a driving force (F) are performed simultaneously to reduce resistance from the soil (S), which acts against the movement of the lower, open end (12) of the peripheral (11) wall into the soil.

3. A method according to claim 1, wherein the method further comprises:
determining pumping parameters for the pumping equipment based on the measurements from the sensor,
operating the pumping equipment using the determined pumping parameters.

4. A method according to any preceding claim, wherein the method further comprises:
controlling the magnitude of the driving force applied to the pile by the pile driving assembly using the measurements from the sensor.

5. A method according to any preceding claim
determining a pressure difference between the internal space and outside of the pile using the measurements from the sensor;
calculating a downward force acting on the pile due to the pressure difference; and controlling the pile driving assembly to control the magnitude of the driving force as a function of the downward force due to the pressure difference.

6. A method according to any preceding claim, wherein the water flow from outside of the pile to the internal space (13) includes at least one of:
water flow adjacent to a lower edge (14) of the peripheral wall (11);
water flow through the soil (S) adjacent a radially outer surface of the peripheral wall;
water flow through the soil adjacent a radially inner surface of the peripheral wall.

7. A method according to any preceding claim, wherein water flow from outside of the pile (1) to the internal space (13) comprises water flowing through at least one channel located in a radially outer surface of the peripheral wall (11).

8. A method according to any preceding claim, wherein the water is pumped out of the internal space (13) through an opening in the peripheral wall (11) of the pile (1).

9. A method according to any preceding claim, wherein the pile (1) or the pile driving assembly further comprises a closing member (40), the closing member closing an upper, open end of the peripheral wall (11); and optionally
wherein water is pumped out of the internal space (13) through an opening in the closing member (40).

10. A method according to any preceding claim, wherein the pile driving assembly exerts an axial loading routine comprising predetermined sequential blows; or
wherein the pile driving assembly exerts an axial loading routine comprising vibratory loading.

11. A method according to any preceding claim, wherein the step of positioning the foundation pile (10) in the first position comprises lowering the pile onto the soil (S) to the first position, wherein self-weight of the pile causes the peripheral wall (11) to penetrate the soil.

12. A method according to any preceding claim wherein the method further comprises connecting the upper section to the lower section (11b) after the part of the lower section (11a) has been driven into the soil (S).

13. A system for driving an offshore pile (1) into soil (S), the system comprising:
a pile comprising a peripheral wall (11) extending from a lower, open end (12);
positioning apparatus for positioning the pile in a first position wherein the lower, open end of the peripheral wall is closed by the soil to define an internal space (13) inside of the peripheral wall;
a pile driving assembly for exerting a driving force (F) onto the pile to drive the pile into the soil, wherein, in use, the pile driving assembly is provided in a coaxial arrangement at or in an upper end (15) of the pile; and
pumping equipment (2) for pumping water from the internal space during the exertion of the driving force, to lower the water level (Wi) in the internal space such that water flows from outside of the pile to the internal space through the lower
open, end (12) of the peripheral wall;
**characterised in that** the pile (1) comprises a lower section (11a) having a first diameter and an upper section (11b) having a second diameter, the second diameter being less than the first diameter, wherein, in use, applying a driving force (F) to the pile (1) to drive the pile (1) into the soil (S) involves driving a part of the lower section (11a) of the pile (1) into the soil; and
the system further comprises a sensor, wherein the sensor is configured to measure the pressure in the internal space (13) or the water level (Wi) in the internal space.

14. A system according to claim 13,
further comprising a closing member (40) which is configured to close an upper, open end of the peripheral wall (11); and/or
further comprising a pile gripper which is usable to keep the pile (1) in a vertical orientation when positioning the pile in the first position.

## Patentansprüche

1. Verfahren zum Rammen eines Offshore-Pfahls (1) in den Boden (S), wobei das Verfahren Folgendes umfasst:
Bereitstellen eines Pfahls, wobei der Pfahl eine Umfangswand (11) umfasst, die sich von einem unteren, offenen Ende (12) erstreckt;
Positionieren des Pfahls in einer ersten Position, wobei das untere, offene Ende der Umfangswand durch den Boden geschlossen ist, um einen Innenraum (13) innerhalb der Umfangswand zu definieren;
Bereitstellen einer Pfahlrammbaugruppe in einer koaxialen Anordnung an oder in einem oberen Ende (15) des Pfahls;
Bereitstellen von Pumpausrüstung (2) an einer Stelle benachbart zu dem Pfahl;
Ausüben einer Rammkraft (F) auf den Pfahl unter Verwendung der Pfahlrammbaugruppe, um den Pfahl in den Boden zu rammen; und
Pumpen von Wasser, unter Verwendung der Pumpausrüstung, aus dem Innenraum während der Ausübung der Rammkraft, um den Wasserstand (Wi) in dem Innenraum zu senken, sodass Wasser von außerhalb des Pfahls durch das untere, offene Ende der Umfangswand zu dem Innenraum strömt, wobei das Pumpen von Wasser aus dem Innenraum (13) den Wasserstand (Wi) in dem Innenraum (13) unter oder weiter unter einem Wasserstand außerhalb des Pfahls (1) senkt,
**dadurch gekennzeichnet, dass** das Verfahren ferner Folgendes umfasst:
Bereitstellen eines Sensors, wobei der Sensor in dem Innenraum (13) bereitgestellt ist;
Messen, mit dem Sensor, eines Drucks in dem Innenraum (13) oder des Wasserstands (Wi) in dem Innenraum, und der Pfahl (1) umfasst einen unteren Abschnitt (11a), der einen ersten Durchmesser aufweist, und einen oberen Abschnitt, der einen zweiten Durchmesser aufweist, wobei der zweite Durchmesser kleiner als der erste Durchmesser ist, wobei das Ausüben einer Rammkraft (F) das Rammen eines Teils des unteren Abschnitts (11a) des Pfahls (1) in den Boden mit sich bringt.

2. Verfahren nach Anspruch 1, wobei das Pumpen von Wasser und das Ausüben einer Rammkraft (F) gleichzeitig durchgeführt werden, um den Widerstand aus dem Boden (S) zu verringern, der gegen die Bewegung des unteren, offenen Endes (12) der Umfangswand (11) in den Boden wirkt.

3. Verfahren nach Anspruch 1, wobei das Verfahren ferner Folgendes umfasst:
Bestimmen von Pumpparametern für die Pumpausrüstung basierend auf den Messungen von dem Sensor,
Betreiben der Pumpausrüstung unter Verwendung der bestimmten Pumpparameter.

4. Verfahren nach einem vorhergehenden Anspruch, wobei das Verfahren ferner Folgendes umfasst:
Steuern der Stärke der Rammkraft, die durch die Pfahlrammbaugruppe auf den Pfahl ausgeübt wird, unter Verwendung der Messungen von dem Sensor.

5. Verfahren nach einem vorhergehenden Anspruch,
Bestimmen einer Druckdifferenz zwischen dem Innenraum und der Außenseite des Pfahls unter Verwendung der Messungen von dem Sensor;
Berechnen einer Abwärtskraft, die auf den Pfahl aufgrund der Druckdifferenz wirkt; und Steuern der Pfahlrammbaugruppe, um die Stärke der Rammkraft als eine Funktion der Abwärtskraft aufgrund der Druckdifferenz zu steuern.

6. Verfahren nach einem vorhergehenden Anspruch, wobei der Wasserstrom von außerhalb des Pfahls zu dem Innenraum (13) mindestens eines von Folgendem beinhaltet:
Wasserstrom benachbart zu einer Unterkante (14) der Umfangswand (11);
Wasserstrom durch den Boden (S) neben einer radial äußeren Oberfläche der Umfangswand;
Wasserstrom durch den Boden neben einer radial inneren Oberfläche der Umfangswand.

7. Verfahren nach einem vorhergehenden Anspruch, wobei der Wasserstrom von außerhalb des Pfahls (1) zu dem Innenraum (13) Wasser umfasst, das durch mindestens einen Kanal strömt, der sich in einer radial äußeren Oberfläche der Umfangswand (11) befindet.

8. Verfahren nach einem vorhergehenden Anspruch, wobei das Wasser aus dem Innenraum (13) durch eine Öffnung in der Umfangswand (11) des Pfahls (1) gepumpt wird.

9. Verfahren nach einem vorhergehenden Anspruch, wobei der Pfahl (1) oder die Pfahlrammbaugruppe ferner ein Schließelement (40) umfasst, wobei das Schließelement ein oberes, offenes Ende der Umfangswand (11) verschließt; und optional
wobei Wasser aus dem Innenraum (13) durch eine Öffnung in dem Schließelement (40) gepumpt wird.

10. Verfahren nach einem vorhergehenden Anspruch, wobei die Pfahlrammbaugruppe eine axiale Belastungsroutine ausübt, die vorbestimmte aufeinanderfolgende Schläge umfasst; oder wobei die Pfahlrammbaugruppe eine axiale Belastungsroutine ausübt, die Vibrationsbelastung umfasst.

11. Verfahren nach einem vorhergehenden Anspruch, wobei der Schritt des Positionierens des Fundamentpfahls (10) in der ersten Position das Absenken des Pfahls auf den Boden (S) in die erste Position umfasst, wobei das Eigengewicht des Pfahls bewirkt, dass die Umfangswand (11) in den Boden eindringt.

12. Verfahren nach einem vorhergehenden Anspruch, wobei das Verfahren ferner das Verbinden des oberen Abschnitts mit dem unteren Abschnitt (11b) umfasst, nachdem der Teil des unteren Abschnitts (11a) in den Boden (S) gerammt worden ist.

13. System zum Rammen eines Offshore-Pfahls (1) in den Boden (S), wobei das System Folgendes umfasst:
einen Pfahl, der eine Umfangswand (11) umfasst, die sich von einem unteren, offenen Ende (12) erstreckt;
Positionierungsgerät zum Positionieren des Pfahls in einer ersten Position, wobei das untere, offene Ende der Umfangswand durch den Boden geschlossen ist, um einen Innenraum (13) innerhalb der Umfangswand zu definieren;
eine Pfahlrammbaugruppe zum Ausüben einer Rammkraft (F) auf den Pfahl, um den Pfahl in den Boden zu rammen, wobei die Pfahlrammbaugruppe im Gebrauch in einer koaxialen Anordnung an oder in einem oberen Ende (15) des Pfahls bereitgestellt ist; und
Pumpausrüstung (2) zum Pumpen von Wasser aus dem Innenraum während der Ausübung der Rammkraft, um den Wasserstand (Wi) in dem Innenraum zu senken, sodass Wasser von außerhalb des Pfahls durch das untere, offene Ende (12) der Umfangswand zu dem Innenraum strömt;
**dadurch gekennzeichnet, dass** der Pfahl (1) einen unteren Abschnitt (11a), der einen ersten Durchmesser aufweist, und einen oberen Abschnitt (11b), der einen zweiten Durchmesser aufweist, umfasst, wobei der zweite Durchmesser kleiner als der erste Durchmesser ist, wobei das Ausüben einer Rammkraft (F) auf den Pfahl (1), um den Pfahl (1) in den Boden (S) zu rammen, im Gebrauch das Rammen eines Teils des unteren Abschnitts (11a) des Pfahls (1) in den Boden mit sich bringt; und
wobei das System ferner einen Sensor umfasst, wobei der Sensor dazu konfiguriert ist, den Druck in dem Innenraum (13) oder den Wasserstand (Wi) in dem Innenraum zu messen.

14. System nach Anspruch 13,
ferner umfassend ein Schließelement (40), das dazu konfiguriert ist, ein oberes, offenes Ende der Umfangswand (11) zu verschließen; und/oder
ferner umfassend einen Pfahlgreifer, der dazu verwendbar ist, den Pfahl (1) in einer vertikalen Ausrichtung zu halten, wenn der Pfahl in der ersten Position positioniert wird.

## Revendications

1. Procédé permettant l'enfoncement d'une pile hauturière (1) dans le sol (S), le procédé comprenant :
la fourniture d'une pile, la pile comprenant une paroi périphérique (11) s'étendant à partir d'une extrémité inférieure ouverte (12) ;
le positionnement de la pile dans une première position, ladite extrémité inférieure ouverte de la paroi périphérique étant fermée par le sol pour définir un espace interne (13) à l'intérieur de la paroi périphérique ;
la fourniture d'un ensemble d'enfoncement de pile dans un agencement coaxial au niveau d'une extrémité supérieure (15) de la pile ou dans celle-ci ;
la fourniture d'un équipement de pompage (2) au niveau d'un emplacement adjacent à la pile ;
l'exercice d'une force d'enfoncement (F) sur la pile à l'aide de l'ensemble d'enfoncement de pile, pour enfoncer la pile dans le sol ; et
le pompage d'eau, à l'aide de l'équipement de pompage, de l'espace interne durant l'exercice de la force d'enfoncement, pour abaisser le niveau d'eau (Wi) dans l'espace interne de sorte que l'eau s'écoule de l'extérieur de la pile vers l'espace interne à travers l'extrémité inférieure ouverte de la paroi périphérique, ledit pompage d'eau de l'espace interne (13) abaissant le niveau d'eau (Wi) dans l'espace interne (13) au-dessous, ou plus loin au-dessous, d'un niveau d'eau à l'extérieur de la pile (1),
**caractérisé en ce que** le procédé comprend en outre :
la fourniture d'un capteur, ledit capteur étant prévu dans l'espace interne (13) ;
la mesure, avec le capteur, d'une pression dans l'espace interne (13) ou du niveau d'eau (Wi) dans l'espace interne et la pile (1) comprend une section inférieure (11a) possédant un premier diamètre et une section supérieure possédant un second diamètre, le second diamètre étant inférieur au premier diamètre, ladite application d'une force d'enfoncement (F) impliquant l'enfoncement d'une partie de la section inférieure (11a) de la pile (1) dans le sol.

2. Procédé selon la revendication 1, ledit pompage d'eau et ledit exercice d'une force d'enfoncement (F) étant effectués simultanément pour réduire la résistance du sol (S), qui agit contre le mouvement de l'extrémité inférieure ouverte (12) de la paroi périphérique (11) dans le sol.

3. Procédé selon la revendication 1, ledit procédé comprenant en outre :
la détermination de paramètres de pompage pour l'équipement de pompage sur la base des mesures en provenance du capteur,
le fonctionnement de l'équipement de pompage à l'aide des paramètres de pompage déterminés.

4. Procédé selon une quelconque revendication précédente, ledit procédé comprenant en outre :
la commande de l'amplitude de la force d'enfoncement appliquée à la pile par l'ensemble d'enfoncement de pile à l'aide des mesures provenant du capteur.

5. Procédé selon une quelconque revendication précédente,
déterminant une différence de pression entre l'espace interne et l'extérieur de la pile à l'aide des mesures provenant du capteur ;
calculant une force descendante agissant sur la pile en raison de la différence de pression ; et commandant l'ensemble d'enfoncement de pile pour commander l'amplitude de la force d'enfoncement en fonction de la force descendante en raison de la différence de pression.

6. Procédé selon une quelconque revendication précédente, ledit écoulement d'eau de l'extérieur de la pile vers l'espace interne (13) comprenant au moins un parmi :
l'écoulement d'eau adjacent à un bord inférieur (14) de la paroi périphérique (11) ;
l'écoulement d'eau à travers le sol (S) adjacent à une surface radialement externe de la paroi périphérique ;
l'écoulement d'eau à travers le sol adjacent à une surface radialement interne de la paroi périphérique.

7. Procédé selon une quelconque revendication précédente, ledit écoulement d'eau de l'extérieur de la pile (1) vers l'espace interne (13) comprenant de l'eau s'écoulant à travers au moins un canal situé dans une surface radialement externe de la paroi périphérique (11).

8. Procédé selon une quelconque revendication précédente, ladite eau étant pompée hors de l'espace interne (13) à travers une ouverture dans la paroi périphérique (11) de la pile (1).

9. Procédé selon une quelconque revendication précédente, ladite pile (1) ou ledit ensemble d'enfoncement de pile comprenant en outre un élément de fermeture (40), l'élément de fermeture fermant une extrémité supérieure ouverte de la paroi périphérique (11) ; et éventuellement
ladite eau étant pompée hors de l'espace interne (13) à travers une ouverture dans l'élément de fermeture (40).

10. Procédé selon une quelconque revendication précédente, ledit ensemble d'enfoncement de pile exerçant une routine de chargement axial comprenant des coups séquentiels prédéfinis ; ou ledit ensemble d'enfoncement de pile exerçant une routine de chargement axial comprenant un chargement vibratoire.

11. Procédé selon une quelconque revendication précédente, ladite étape de positionnement de la pile de fondation (10) dans la première position comprenant l'abaissement de la pile sur le sol (S) à la première position, ledit poids propre de la pile amenant la paroi périphérique (11) à pénétrer dans le sol.

12. Procédé selon une quelconque revendication précédente, ledit procédé comprenant en outre le raccordement de la section supérieure à la section inférieure (11b) après que la partie de la section inférieure (11a) a été enfoncée dans le sol (S).

13. Système destiné à l'enfoncement d'une pile hauturière (1) dans le sol (S), le système comprenant :
une pile comprenant une paroi périphérique (11) s'étendant à partir d'une extrémité inférieure ouverte (12) ;
un appareil de positionnement destiné à positionner la pile dans une première position, ladite extrémité inférieure ouverte de la paroi périphérique étant fermée par le sol pour définir un espace interne (13) à l'intérieur de la paroi périphérique ;
un ensemble d'enfoncement de pile destiné à exercer une force d'enfoncement (F) sur la pile pour enfoncer la pile dans le sol, lors de l'utilisation, ledit ensemble d'enfoncement de pile étant prévu dans un agencement coaxial au niveau d'une extrémité supérieure (15) de la pile ou dans celle-ci ; et
un équipement de pompage (2) destiné à pomper l'eau de l'espace interne durant l'exercice de la force d'enfoncement, pour abaisser le niveau d'eau (Wi) dans l'espace interne de sorte que l'eau s'écoule de l'extérieur de la pile vers l'espace interne à travers l'extrémité inférieure ouverte (12) de la paroi périphérique ;
**caractérisé en ce que** la pile (1) comprend une section inférieure (11a) possédant un premier diamètre et une section supérieure (11b) possédant un second diamètre, le second diamètre étant inférieur au premier diamètre, lors de l'utilisation, ladite application d'une force d'enfoncement (F) à la pile (1) pour enfoncer la pile (1) dans le sol (S) impliquant l'enfoncement d'une partie de la section inférieure (11a) de la pile (1) dans le sol ; et
le système comprend en outre un capteur, ledit capteur étant conçu pour mesurer la pression dans l'espace interne (13) ou le niveau d'eau (Wi) dans l'espace interne.

14. Système selon la revendication 13,
comprenant en outre un élément de fermeture (40) qui est conçu pour fermer une extrémité supérieure ouverte de la paroi périphérique (11) ; et/ou
comprenant en outre un dispositif de préhension de pile qui peut être utilisé pour maintenir la pile (1) dans une orientation verticale lors du positionnement de la pile dans la première position.
